# EUROPEAN PATENT APPLICATION

(11) **EP 4 598 114 A1**
(43) Date of publication of application: **06.08.2025**
(21) Application number: 22959757.0
(22) Date of filing: 26.09.2022
(51) Int. Cl.: H04W 28/24

(54) **LOGIC CHANNEL PRIORITIZATION PROCESSING METHOD AND APPARATUS, AND ELECTRONIC DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/121444
(87) International publication number: WO 2024/065105

(57) **Abstract**

Provided in the present disclosure are a logic channel prioritization processing method and apparatus, and an electronic device and a storage medium. The method comprises: determining that a first logic channel corresponds to first data having a high scheduling emergency requirement in a first service; and performing logic channel prioritization processing on the first logic channel according to logic channel priorities. In the present disclosure, logic channel prioritization processing is performed on a first logic channel which corresponds to first data having a high scheduling emergency requirement, such that the situation of emergency transmission of data having a high scheduling emergency requirement can be handled in a timely manner, thereby realizing priority transmission of emergency data and meeting a latency requirement of data transmission.

## Description

### TECHNICAL FIELD

The present disclosure relates to the field of wireless communication technologies and, in particular, to a logical channel prioritization processing method and apparatus, an electronic device, and a storage medium.

### BACKGROUND

Extended reality (XR) refers to an environment that is generated through computer technologies and wearable devices, combines reality and virtuality, and allows for human-machine interaction. The XR is a collective term for a plurality of technologies such as augmented reality (AR), virtual reality (VR), mixed reality (MR), etc. By integrating visual interaction technologies of the AR, VR, and MR, users are provided with an "immersive feeling" of seamless transition between the virtual world and the real world.

The rapid development of the 5th generation mobile communication technology (also referred to as the 5G technology) enables the mobile communication have a huge impact on people's lives and work.

In XR services, a service flow is generally composed of a plurality of data streams, and has a very large data volume. The transmission of the service flow of the XR service needs to meet a certain latency requirement, especially for some data streams that need to reach the network function simultaneously for synchronous processing (such as joint decoding). Then, the delay of any data stream will result in the failure of the synchronous processing of a plurality of data streams. Therefore, in the process of implementing the XR service by using the 5G technology, the access network device configures the priority of the logical channel. In the 5G technology, the prioritization processing is performed, by using the logic channel prioritization (LCP) procedure, on the logical channel carrying the data stream.

However, during data transmission, there is always a situation of emergency transmission. In this case, the data of one or more data streams may be provided with a high scheduling emergency requirement. For example, the data carried in the logical channel is provided with a small delay budget. However, the existing LCP procedure is not capable of reacting in a timely manner to the situation of emergency transmission.

Then, how to make the logical channel prioritization processing respond to the situation of emergency transmission in a timely manner is an urgent problem to be solved.

### SUMMARY

The present disclosure provides a logical channel prioritization processing method and apparatus, an electronic device, and a storage medium to achieve the prioritized transmission of the emergency data.

In a first aspect, the present disclosure provides a logical channel prioritization processing method. The method may be applied to a terminal device such as a user equipment (UE). The method described above may include: determining that a first logical channel corresponds to first data with a high scheduling emergency requirement in a first service; and performing, according to a logical channel priority, logical channel prioritization processing on the first logical channel.

In some possible embodiments, the first service may be an extended reality (XR) service.

In some possible embodiments, the first data may be provided with a most stringent delay budget.

In some possible embodiments, the first data may be data indicated by a non-access stratum (NAS) and/or an application layer; or the first data may be data whose time left until exceeding a packet delay budget is less than a first threshold.

In some possible embodiments, the first data may be a packet or a packet set.

In some possible embodiments, through the logical channel prioritization processing, the first data may be carried in any grant of uplink grants configured for the terminal device by an access network device.

In some possible embodiments, the logical channel prioritization processing may include a relaxed logical channel selection procedure.

In some possible embodiments, in the relaxed logical channel selection procedure, at least one of the following is performed on the first logical channel: in a case of a failure of an allowed configured grant list (allowedCG-List) configuration restriction condition, mapping data of a logical channel to any configured grant that has been configured; in a case of a failure of an allowed hybrid automatic retransmission request mode (allowedHARQ-mode) configuration restriction condition, providing no restriction for mapping of a logical channel and a hybrid automatic retransmission request (HARQ) mode; in a case of a failure of an allowed subcarrier spacing list (allowedSCS-List) configuration restriction condition, mapping data of a logical channel to any configured numerology; in a case of a failure of an allowed physical priority index (allowedPHY-PriorityIndex) configuration restriction condition, mapping data of a logical channel to any dynamic grant; in a case of a failure of an allowed serving cells (allowedServingCells) configuration restriction condition, mapping data of a logical channel to any configured serving cell of a cell group; in a case of a failure of a configured grant type 1 allowed (configuredGrantType1Allowed), not transmitting data of a logical channel by using a configured grant type 1; and in a case of a failure of a maximum physical uplink shared channel duration (maxPUSCH-Duration), transmitting data of a logical channel by using any physical uplink shared channel (PUSCH) duration.

In some possible embodiments, in performing, according to the logical channel priority, the logical channel prioritization processing on the first logical channel, transmission of the first data of the first logical channel is not restricted by using a token bucket.

In some possible embodiments, when the transmission of the first data of the first logical channel is not restricted by using the token bucket, the performing, according to the logical channel priority, the logical channel prioritization processing on the first logical channel includes preferentially mapping, when a delay budget of the first data of the first service is less than a first threshold, the first data of the first logical channel to a grant.

In some possible embodiments, a priority of the first logical channel is temporarily elevated to a highest priority level when resource allocation or logical channel priority level ranking is performed.

In some possible embodiments, the method described above may further include mapping the first logical channel to a first grant; where the first grant is dedicated to the first data, or is preferentially used for the first data.

In some possible embodiments, the method described above may further include receiving the first grant indicated by an access network device.

In some possible embodiments, before the operation of receiving the first grant indicated by the access network device, the method described above may further include sending auxiliary information to the access network device, where the auxiliary information is used for the access network device to determine the first grant.

In a second aspect, the present disclosure further provides a logical channel prioritization processing method. The method may be applied to an access network device. The method described above includes indicating a first grant to a terminal device, where the first grant is dedicated to or preferentially used for first data with a high scheduling emergency requirement.

In some possible embodiments, before the operation of indicating the first grant to the terminal device, the method described above may further include receiving auxiliary information from the terminal device, where the auxiliary information is used for the access network device to determine the first grant.

In a third aspect, the present disclosure further provides a logical channel prioritization processing apparatus. The apparatus may be arranged in a terminal device. The method described above includes a processing module. The processing module is configured to determine that a first logical channel corresponds to first data with a high scheduling emergency requirement in a first service, and perform, according to a logical channel priority, logical channel prioritization processing on the first logical channel.

In some possible embodiments, the first service may be an XR service.

In some possible embodiments, the first data may be provided with a most stringent delay budget.

In some possible embodiments, the first data may be data indicated by an NAS and/or an application layer; or the first data may be data whose time left until exceeding a packet delay budget is less than a first threshold.

In some possible embodiments, the first data may be a packet or a packet set.

In some possible embodiments, through the logical channel prioritization processing, the first data may be carried in any grant of uplink grants configured for the terminal device by an access network device.

In some possible embodiments, the logical channel prioritization processing may include a relaxed logical channel selection procedure.

In some possible embodiments, in the relaxed logical channel selection procedure, at least one of the following is performed on the first logical channel: in a case of a failure of an allowedCG-List configuration restriction condition, mapping data of a logical channel to any configured grant that has been configured; in a case of a failure of an allowedHARQ-mode configuration restriction condition, providing no restriction for mapping of a logical channel and an HARQ mode; in a case of a failure of an allowedSCS-List configuration restriction condition, mapping data of a logical channel to any configured numerology; in a case of a failure of an allowedPHY-PriorityIndex configuration restriction condition, mapping data of a logical channel to any dynamic grant; in a case of a failure of an allowedServingCells configuration restriction condition, mapping data of a logical channel to any configured serving cell of a cell group; in a case of a failure of a configuredGrantType1Allowed configuration restriction condition, not transmitting data of a logical channel by using a configured grant type 1; and in a case of a failure of a maxPUSCH-Duration configuration restriction condition, transmitting data of a logical channel by using any PUSCH duration.

In some possible embodiments, the processing module described above may be configured to not use a token bucket to restrict transmission of the first data of the first logical channel.

In some possible embodiments, the processing module described above may be configured to preferentially map, when a delay budget of the first data of the first service is less than a first threshold, the first data of the first logical channel to a grant.

In some possible embodiments, a priority of the first logical channel is temporarily elevated to a highest priority level when resource allocation or logical channel priority level ranking is performed.

In some possible embodiments, the processing module described above may be configured to map the first logical channel to a first grant; where the first grant is dedicated to the first data, or is preferentially used for the first data.

In some possible embodiments, the apparatus described above may further include a receiving module. The receiving module is configured to receive the first grant indicated by an access network device.

In some possible embodiments, the sending module described above may be further configured to send auxiliary information to the access network device, where the auxiliary information is used for the access network device to determine the first grant.

In a fourth aspect, the present disclosure further provides a logical channel prioritization processing apparatus. The apparatus may be arranged in an access network device. The apparatus described above includes a sending module. The sending module is configured to indicate a first grant to a terminal device, where the first grant is dedicated to or preferentially used for first data with a high scheduling emergency requirement.

In some possible embodiments, the apparatus described above may further include a receiving module. The receiving module is configured to receive auxiliary information from the terminal device, where the auxiliary information is used for the access network device to determine the first grant.

In a fifth aspect, the present disclosure further provides an electronic device. The electronic device includes a memory and a processor. The memory is configured to store a computer-executable instruction. The processor is configured to execute the computer-executable instruction in the memory, thereby implementing the logical channel prioritization processing method in any of the first aspect and the second aspect, and the possible embodiments thereof.

In a sixth aspect, the present disclosure further provides a computer storage medium. The computer storage medium stores a computer-executable instruction. The computer-executable instruction, when executed by a processor of an electronic device, is capable of implementing the logical channel prioritization processing method in any of the first aspect and the second aspect, and the possible embodiments thereof.

According to the logical channel prioritization processing method of the present disclosure, the logical channel prioritization processing is performed on the first logical channel corresponding to the first data with the high scheduling emergency requirement. In this way, emergency transmission situations where the data with the high scheduling emergency requirement is present can be responded to in a timely manner, which achieves the prioritized transmission of the emergency data, and meets the delay requirement of the data transmission.

It should be understood that the third to sixth aspects of the present disclosure are consistent with the technical solutions of the first to second aspects of the present disclosure. The beneficial effects achieved by each aspect and the corresponding feasible embodiments are similar, and thus will not be reiterated.

### BRIEF DESCRIPTION OF THE DRAWINGS

FIG. 1 is a schematic diagram of a scenario for implementing an XR service based on a 5G communication system.
FIG. 2 is a schematic flowchart of a logical channel prioritization processing method in an embodiment of the present disclosure.
FIG. 3 is a schematic flowchart of a logical channel prioritization processing method in an embodiment of the present disclosure.
FIG. 4 is a schematic flowchart of a logical channel prioritization processing method in an embodiment of the present disclosure.
FIG. 5 is a schematic diagram of a structure of a logical channel prioritization processing apparatus in an embodiment of the present disclosure.
FIG. 6 is a schematic diagram of a structure of a logical channel prioritization processing apparatus in an embodiment of the present disclosure.
FIG. 7 is a schematic diagram of a structure of an electronic device in an embodiment of the present disclosure.
FIG. 8 is a schematic diagram of a structure of a terminal device in an embodiment of the present disclosure.
FIG. 9 is a schematic diagram of a structure of a network device in an embodiment of the present disclosure.

### DETAILED DESCRIPTION

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the embodiments of the present disclosure as detailed in the appended claims.

The terms used in the embodiments of the present disclosure are used solely for the purpose of describing particular embodiments, but are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms "first", "second", "third", etc. may be used in the embodiments of the present disclosure to describe various types of information, such information should not be limited to these terms. These terms are only used to distinguish the same type of information from one another. For example, without departing from the scope of the embodiments of the present disclosure, the "first information" may also be referred to as the "second information", and similarly, the "second information" may also be referred to as the "first information". Depending on the context, the phrase "if" as used herein may be interpreted as "at the time of......", "when ......", or "in response to determining".

Furthermore, in the description of the embodiments of the present disclosure, "and/or" is only a description of the association relationship between associated objects, and indicates that there may be three types of relationships. For example, A and/or B may indicate three situations: A exists alone, A and B exist simultaneously, and B exists alone. In addition, in the description of the embodiments of the present disclosure, "a plurality of" may refer to two or more than two.

The rapid development of the 5G technology enables the mobile communication have a huge impact on people's lives and work. In the 5G technology, the access network device sends the uplink grant (UL grant) to the terminal device, thereby allocating the uplink grant resource to the terminal device. After receiving the uplink grant from the access network function, the terminal device may multiplex the data from a plurality of logical channels to the transmission resource. Then, the terminal device needs to perform, through the logical channel selection procedure and the logical channel prioritization procedure, the prioritization processing on the logical channel carrying the data.

The terminal device first performs the logical channel selection procedure to select a logical channel. Specifically, the logical channel selection procedure includes some conditions, and only a logical channel that meets these conditions can be used for transmission of the data, that is, as a candidate logical channel for data transmission. These conditions involve the following contents (parameters): an allowed subcarrier spacing list (e.g., allowedSCS-List), a maximum physical uplink shared channel duration (e.g., maxPUSCH-Duration), a configured grant type 1 allowed (e.g., configuredGrantType 1 Allowed), allowed serving cells (e.g., allowedServingCells), an allowed configured grant list (e.g., allowedCG-List), an allowed physical priority index (e.g., allowedPHY-PriorityIndex), and an allowed hybrid automatic retransmission request mode (e.g., allowedHARQ-mode).

Specifically, the above contents are described in detail on the background of the 5G communication system:
- allowdSCS List: the allowed subcarrier spacing (SCS) for transmission is set in the allowdSCS-List; then the corresponding condition for the logical channel to be selected or the corresponding condition that needs to be met for the logical channel to be selected is: (if configured) the allowed subcarrier spacing index set in the allowedSCS-List includes the subcarrier spacing index associated with the uplink grant;
- maxPUSCH-Duration: the allowed maximum PUSCH duration for transmission is set in the maxPUSCH-Duration; then the corresponding condition for the logical channel to be selected or the corresponding condition that needs to be met for the logical channel to be selected is: (if configured) the maxPUSCH-Duration is greater than or equal to the PUSCH transmission duration associated with the uplink grant;
- configurationGrantType 1 Allowed: whether the configured grant type 1 can be used for transmission is set in the configurationGrantType1Allowed; then the corresponding condition for the logical channel to be selected or the corresponding condition that needs to be met for the logical channel to be selected is: (if configured and true) in the case where the uplink is the configured grant type 1;

- allowedServingCells: the allowed cell for transmission is set in the allowedServingCells; then the corresponding condition for the logical channel to be selected or the corresponding condition that needs to be met for the logical channel to be selected is: (if configured) the allowedServingCells includes cell information associated with the uplink grant;
- allowedCG-List: the allowed configured grant (CG) for transmission is set in the allowedCG-List; then the corresponding condition for the logical channel to be selected or the corresponding condition that needs to be met for the logical channel to be selected is: (if configured) the allowedCG-List includes the configured grant (CG) index associated with the uplink grant;
- allowedPHY-PriorityIndex: the allowed physical layer (PHY) priority index of the dynamic grant for transmission is set in the allowedPHY-PriorityIndex; then the corresponding condition for the logical channel to be selected or the corresponding condition that needs to be met for the logical channel to be selected is: (if configured) the allowedPHY-PriorityIndex includes the physical layer priority index associated with the dynamic uplink grant; and
- allowedHARQ-mode: the allowed uplink HARQ mode of the HARQ process of the dynamic grant for transmission is set in the allowedHARQ-mode; then the corresponding condition for the logical channel to be selected or the corresponding condition that needs to be met for the logical channel to be selected is: (if configured) the allowedHARQ-mode includes the HARQ mode associated with the dynamic uplink grant associated HARQ process.

It should be noted that the above parameters may also be present in further evolved releases of the communication standard, and may be provided with different names, which are not specifically limited in the embodiments of the present disclosure.

After the logical channel selection, the terminal device performs the logical channel prioritization procedure to allocate a resource for the selected logical channel. The specific implementation of the logical channel prioritization procedure and the priority order of the logical channel may refer to the description of the LCP in 5.4.3.1 of the 3GPP standard document TS 36.321.

The XR refers to an environment that is generated through computer technologies and wearable devices, combines reality and virtuality, and allows for human-machine interaction. The XR is a collective term for a plurality of technologies such as AR, VR, MR, etc. By integrating visual interaction technologies such as the AR, VR, and MR, users are provided with an "immersive feeling" of seamless transition between the virtual world and the real world. In XR services, a service flow is generally composed of a plurality of data streams, and has a very large data volume.

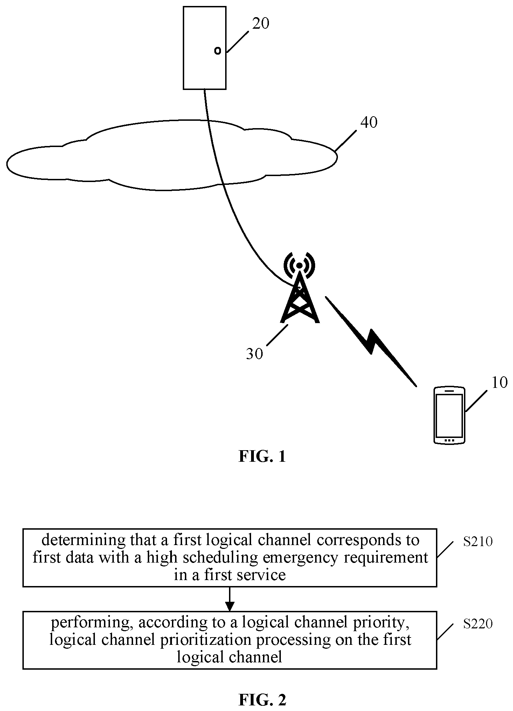

The 5G technology may be used for implementing an XR service. FIG. 1 is a schematic diagram of a scenario for implementing an XR service based on a 5G communication system. In FIG. 1, the terminal device 10 is a device configured to implement the XR service. For example, the terminal device 10 may be devices such as glasses, helmets, mobile phones, projectors, displays, etc. The server 20 is a server device configured to provide the XR service, and is usually provided by the operator or the content provider. The terminal device 10 is connected to the server 20 through the access network 30 and the core network 40 of the 5G communication system, thereby achieving data transmission between the terminal device 10 and the server 20.

The transmission of the service flow of the XR service needs to meet a certain latency requirement, especially for some data streams that need to reach the network function simultaneously for synchronous processing (such as joint decoding). Then, the delay of any data stream will result in the failure of the synchronous processing of a plurality of data streams. Therefore, in the process of implementing the XR service by using the 5G technology, the access network function obtains the emergency level of each data stream in the scheduling process and configures the priority of the logical channel. In the 5G technology, the prioritization processing is performed, by using the logic channel prioritization (LCP) procedure, on the logical channel carrying the data stream.

However, during data transmission, there is always a situation of emergency transmission. In this case, the data of one or more data streams may be provided with a high scheduling emergency requirement. For example, the data is provided with a small delay budget. However, the existing LCP procedure is not capable of reacting in a timely manner to the situation of emergency transmission.

Then, how to make the logical channel prioritization processing respond to the situation of emergency transmission in a timely manner is an urgent problem to be solved.

In order to solve the above problem, the embodiments of the present disclosure provide a logical channel prioritization processing method. The communication method may be applied to a terminal device. For example, the terminal device may be a user equipment (UE). An access network device may be the next generation NodeB (gNB) in the 5G communication system.

It should be noted that when the terminal device performs the logical channel prioritization processing method of the embodiments of the present disclosure, the method may actually be performed by a medium access control entity (MAC entity) in the terminal device. The MAC entity is located in the L2 MAC layer. Of course, in other cases, the method may also be implemented by other layers, and the embodiments of the present disclosure do not make specific limitations on this.

FIG. 2 is a schematic flowchart of a logical channel prioritization processing method in an embodiment of the present disclosure, which is applied to a terminal device. As shown in FIG. 2, the method may include S210 and S220.

At S210, it is determined that a first logical channel corresponds to first data with a high scheduling emergency requirement in a first service.

In some embodiments, the terminal device makes a judgment on the data in the first logical channel to determine whether the data is the data of the first service and whether the data is provided with the high scheduling emergency requirement. In the case where it is determined that the data is the data of the first service and is provided with the high scheduling emergency requirement, the terminal device may determine that the first logical channel corresponds to the first data with the high scheduling emergency requirement.

In addition, the first data may be expanded from the data being provided with the high scheduling emergency requirement to the data being provided with a special scheduling requirement.

In an embodiment, the first data in the first logical channel may be the data (indicated by a sub-flow ID) used for transmitting a certain quality of service (QoS) sub-flow in that logical channel.

It can be understood that the terminal device may be provided with one or more logical channels.

In an embodiment, the first service may be an XR service. The terminal device may be a dedicated device for implementing the XR service, e.g., XR glasses, an XR helmet, an XR projector, etc.; the terminal device may also be a general-purpose device capable of implementing the SR service, e.g., a mobile phone, a display, etc. In an embodiment where the terminal device is a dedicated device for implementing the XR service, one or more logical channels of the terminal device may all be used for carrying the data of the XR service. In an embodiment where the terminal device is a general-purpose device capable of implementing the XR service, at least one channel of one or more logical channels of the terminal device may be used for carrying the data of the XR service. It should be noted that the first service in the embodiments of the present disclosure may also be other services other than the XR service, in particular, a service having a large data volume and a low latency requirement, and the embodiments of the present disclosure do not make specific limitations on this.

In an embodiment, the time left until exceeding the packet delay budget (the time left until exceeding the PDB) is less than a certain delay threshold (e.g., it is judged that the time left until exceeding the packet delay budget of the packet is less than 10 ms; and the delay threshold may be agreed upon in the protocol or obtained from the network notification. The configuration granularity of the packet delay budget (PDB) may be specific to a single packet or to a packet set.).

The terminal device may estimate the PDB of which packets is close to be used up and has not yet been scheduled, and thus needs to be prioritized for scheduling. The data with the high scheduling emergency requirement may be based on the packet statistics or the statistics for a packet set.

In an embodiment, the threshold may be configured by the access network device. For example, the terminal device may receive configuration information from the access network device, and the configuration information is used for indicating the threshold. In an embodiment, the granularity at which the access network device configures the threshold includes, but is not limited to, in units of terminal devices, in units of logical channel groups, and in units of logical channels (LCs).

In an embodiment, the first data may include one of the following: the first data from a non-access stratum and/or the first data indicated by an application layer; and the data of the first service with a delay budget less than a first threshold. For example, the first data may be indicated by the NAS as being provided with the high scheduling emergency requirement. For another example, the first data may be indicated by the application layer as being provided with the high scheduling emergency requirement.

In an embodiment, the first data with the emergency scheduling requirement may include the following: the uplink data with a prioritized scheduling requirement, the uplink data with a high scheduling requirement.

The data with the emergency scheduling requirement may also be uplink data that requires the prioritized scheduling requirement. The data with the emergency scheduling requirement may also be the uplink data that needs to be sent in a timely manner as determined by the network or the terminal.

The data with the emergency scheduling requirement may also be determined based on the service characteristic of the specific data. For example, it may be determined based on the importance of the uplink data whether the uplink data is provided with the emergency scheduling requirement. For example, I-frame data is more important than P-frame data, and it may be determined that the I-frame data is provided with the emergency scheduling requirement.

For example, the uplink data with the emergency scheduling requirement may be one of a plurality of data streams undergoing joint decoding. Since the plurality of data streams need to be jointly decoded, if one of the data streams does not arrive before the predetermined decoding timepoint, then the decoding will be caused to fail.

In a possible implementation, the uplink data with the emergency scheduling requirement may be the uplink data with a time interval from the latest sending deadline less than a predetermined duration threshold.

In an implementation, the first data may be the data whose time left until exceeding the packet delay budget is less than a first threshold. The time left until exceeding the packet delay budget may be a difference between the delay budget of the data and a length of time that the data has been waiting. That is, the time left until exceeding the packet delay budget is the length of time remaining in the delay budget configured for the data.

In an embodiment, the first data is a packet or a packet set. Correspondingly, the first data with the high scheduling emergency requirement may be based on the packet statistics or based on the packet set statistics. For example, the terminal device performs statistics on the first data in the first logical channel, and determines, based on the result of the statistics, that the first data is provided with the high scheduling emergency requirement.

At S220, logical channel prioritization processing is performed on the first logical channel according to a logical channel priority.

In some embodiments, the selection of the first logical channel corresponding to the first data with the high scheduling emergency requirement is based on a first condition. That is, the first logical channel needs to meet the first condition in order to be selected for data transmission.

In an embodiment, in the selection of the first logical channel corresponding to the first data with the most stringent delay budget, the first condition includes at least one of the following:
- (if configured) the allowed subcarrier spacing index set in the allowedSCS-List including the subcarrier spacing index associated with the uplink grant;
- (if configured) the maxPUSCH-Duration being greater than or equal to the PUSCH transmission duration associated with the uplink grant;
- (if configured) in the case that the uplink is the configured grant type 1, the configuredGrantType1Allowed being set to true, and the allowedServingCells including cell information associated with the uplink grant;
- (if configured) the allowedCG-List including the configured grant index associated with the uplink grant; and
- (if configured) the allowedPHY-PriorityIndex including the priority index associated with the dynamic uplink grant.

In an embodiment, through the logical channel prioritization processing, the first data may be carried in any grant of uplink grants configured for the terminal device by the access network device.

It can be understood that when the first logical channel is configured with the parameters such as the allowedSCS-List, the maxPUSCH-Duration, the configuredGrantType1Allowed, the allowedServingCells, the allowedCG-List, and the allowedPHY-PriorityIndex, etc., if the configured parameter fails, it may cause that the first logical channel cannot be selected for data transmission. For this reason, in the logical channel prioritization processing, the selection of the first logical channel may also be a relaxed logical channel selection. Correspondingly, the logical channel prioritization processing may also be referred to as enhanced logical channel prioritization processing. The relaxed logical channel selection may be based on a second condition.

It can be understood that the second condition, i.e., failure of one or more conditions configured in the first condition (not applying the restriction), is actually a relaxation of the selection procedure of the logical channel. In this case, the terminal makes a selection under the second condition, the restriction on the logical channel is reduced, and the logical channel is more likely to be selected as the logical channel for the data to be transmitted.

In an embodiment, in the relaxed logical channel selection, the second condition includes one of the following:
- in a case of a failure of the allowedCG-List configured for the logical channel (not applying this restriction);
- in a case of a failure of the allowedHARQ-mode configured for the logical channel;
- in a case of a failure of the allowedSCS-List configured for the logical channel;
- in a case of a failure of the allowedPHY-PriorityIndex configured for the logical channel;
- in a case of a failure of the configuredGrantType1Allowed configured for the logical channel; and
- in a case of a failure of the maxPUSCH-Duration configured for the logical channel.

In an embodiment, in the relaxed logical channel selection, performing the logical channel selection based on the second condition includes one of the following:
- in the case of the failure of the allowedCG-List, mapping the data of the logical channel to any configured grant that has been configured (Not applying this restriction, UL medium access control (MAC) service data units (SDUs) from this logical channel can be mapped to any configured grant configurations.);
- in the case of the failure of the allowedHARQ-mode, providing no restriction for mapping of the logical channel and the HARQ mode (Not applying this restriction, there is no restriction for HARQ mode for the mapping.);
- in the case of the failure of the allowedSCS-List, mapping the data of the logical channel to any configured numerology (Not applying this restriction, UL MAC SDUs from this logical channel can be mapped to any configured numerology.);
- in the case of the failure of the allowedPHY-PriorityIndex, mapping the data of the logical channel to any dynamic grant (Not applying this restriction, UL MAC SDUs from this logical channel can be mapped to any dynamic grants.);
- in the case of the failure of the allowedServingCells, mapping the data of the logical channel to any configured serving cell of a cell group (Not applying this restriction, UL MAC SDUs from this logical channel can be mapped to any configured serving cell of this cell group.);
- in the case of the failure of the configuredGrantType1Allowed, the data of the logical channel being capable of being transmitted in a grant type 1 outside the configuration of the allowedSCS-List (Not applying this restriction, those configured grant type 1 configuration not indicated in allowedCG-List are allowed for use by this logical channel.); and
- in the case of the failure of the maxPUSCH-Duration, transmitting the data of the logical channel by using any PUSCH duration (Not applying this restriction, UL MAC SDUs from this logical channel can be transmitted using an uplink grant resulting in any PUSCH duration.).

It should be noted that the plurality of conditions described above may exist individually or concurrently. Specifically, one condition in the parameters such as the allowedSCS-List, the allowedHARQ-mode, the maxPUSCH-Duration, the configuredGrantType1Allowed, the allowedServingCells, the allowedCG-List, the allowedPHY-PriorityIndex, and the allowedHARQ-mode (not excluding the introduction of more logical channel selection restriction condiitions in the future protocol) may fail, or a plurality of the conditions may fail simultaneously.

In an embodiment, in the relaxed logical channel selection, performing the logical channel selection based on the second condition includes that all of the above configured parameters such as the allowedSCS-List, the allowedHARQ-mode, the maxPUSCH-Duration, the configuredGrantType1Allowed, the allowedServingCells, the allowedCG-List, the allowedPHY-PriorityIndex, and the allowedHARQ-mode fail, i.e., none of the above restriction judgments needs to be performed for the selection of the logical channel.

In an embodiment, the second condition may be indicated by the access network device. In an embodiment, the second condition may be pre-agreed according to the protocol.

For the selected first logical channel, the terminal device performs the logical channel prioritization procedure to determine a mapping of the first logical channel to a resource, i.e., performing resource allocation.

In an embodiment, the terminal device processes the first logical channel by using a relaxed token bucket procedure. In the relaxed token bucket procedure, the terminal device does not use the token bucket to restrict transmission of the first data of the first logical channel.

In an embodiment, when a delay budget of the first data of the first service is less than a first threshold, the first data of the first logical channel is preferentially mapped to a grant.

In an embodiment, for one or more logical channels of the terminal device, the relaxed token bucket procedure described above may specifically include three steps. In some embodiments, for each logical channel j, a variable Bj is assigned.

In a first step, resources are allocated, in a decreasing priority order, for all of the allowed logical channels with Bj>0. If the prioritized bit rate (PBR) of a logical channel is set to "infinite", the terminal device allocates resources for all the transmittable data on that logical channel until the PBR of the logical channel with a low priority is reached. If the packet delay budget (PDB) has been configured, and the first data is present in any logical channel, i.e., the logical channel of the uplink data whose time left until exceeding the packet delay budget is less than a threshold, the terminal device allocates resources for all the transmittable data on that logical channel until the PBR of the logical channel of the low priority is reached. This can ensure that the first data in the logical channel that is about to reach the packet delay budget can be prioritized to be transmitted.

In a second step, the total size of the MAC SDU that has served the logical channel j in the first step is subtracted from Bj.

In a third step, if there are still resources available, resources are allocated (regardless of the value of Bj) for all the allowed logical channels in a strictly decreasing priority order until the grant or data of the logical channel is run out. Logical channels with the equal priority should be treated equally.

In the relaxed token bucket procedure described above, the token bucket restriction is not performed on the first logical channel. In an embodiment, the terminal device may allocate resources for all the data that meets the PBD requirement for transmission.

In an embodiment, the terminal device may allocate resources for all the data with the high scheduling emergency requirement for transmission. It should be noted that in this case, the number of the allocated resources may exceed the size of the token bucket.

It should be noted that the resource in the relaxed token bucket procedure in the above embodiments is configured by the access network device for the terminal device.

In an embodiment, before step S220, in an embodiment, the method described above may further include receiving a radio resource control (RRC) signaling from the access network device. The RRC signaling may include a logical channel configuration parameter, where the logical channel configuration parameter is used for indicating the priority of the first logical channel.

Specifically, the priority of the logical channel of the terminal device is determined and configured by the access network device for the terminal device. In an embodiment, the terminal device may receive an RRC signaling from the access network device. The RRC signaling includes a logical channel configuration (logicalChannelConfig) parameter, where the logical Channel Config parameter is used for indicating the priority of the first logical channel. Specifically, the access network device may send the logical Channel Config parameter to the terminal device. A priority field used for indicating the priority of the logical channel may be included in the logicalChannelConfig parameter. The priority field includes the priority of the first logical channel.

In an embodiment, when the resource allocation described above is performed, the logical channel ranking is performed, and during the resource allocation according to the logical channel (an additional token bucket restriction may be applied), the priority of the first logical channel may be temporarily elevated to the highest priority level.

In an embodiment, the priority of the first logical channel may be temporarily elevated to the highest priority level when the resource allocation or the logical channel priority level ranking is performed. For example, both LCH1 and LCH2 are selected for the resource allocation. In this case, even though the logical channel priority level of the LCH1 is higher, because there is the data in the LCH2, the priority level is elevated. Therefore, resource allocation will be performed according to the LCH2 according to the token bucket (if an additional token bucket algorithm is applied), and then resource allocation is performed according to the LCH1 according to the token bucket (if an additional token bucket algorithm is applied).

In an embodiment, after the resource resource is completed, the logical channel ranking is performed, and the priority of the first logical channel may be temporarily elevated to the highest priority level.

In an embodiment, after the resource resource is completed, the logical channel ranking is performed, and the data part including the first data may be placed even before a portion of the MAC control element (CE), i.e., the priority is temporarily elevated to the highest priority level.

Further, in an embodiment, during the logical channel prioritization procedure, the logical channel (and the data carried therein) of the terminal device follows the following relative priorities (listed from highest to lowest):
- the MAC CE for the cell-radio network temporary identifier (C-RNTI), or the data from the uplink common control channel (UL-CCCH);
- the MAC CE for the (enhanced) beam failure recovery (BFR), or the MAC CE for the configured grant confirmation, or the MAC CE for the multi-entry configured grant confirmation;
- the MAC CE for the sidelink configured grant confirmation;
- the MAC CE for the listen before talk (LBT) failure;
- the MAC CE for the timing advance report;
- the MAC CE for the prioritized sidelink-buffer status report (SL-BSR);
- the MAC CE for the (extended) BSR (excluding the padding BSR);
- the MAC CE for the (enhanced) single-entry power headroom report (PHR), or the MAC CE for the (enhanced) multi-entry PHR;
- the MAC CE for the positioning measurement gap activation/deactivation request;
- the MAC CE for the number of desired guard symbols;
- the MAC CE for the Case-6 timing request;
- the MAC CE for the (extended) pre-emptive BSR;
- the MAC CE for the SL-BSR (excluding the prioritized SL-BSR and the padding SL-BSR);
- the MAC CE for the IAB-MT recommended beam indication, or the MAC CE for the desired IAB-MT protection switch duration (PSD) range, or the MAC CE for the desired downlink transmit power adjustment;
- the data with the most stringent delay budget (stringiest delay budget) from any logical channel;
- the data from any logical channel (excluding the data from the UL-CCCH);
- the MAC CE for the recommend bit rate query;
- the MAC CE for the padding BSR;
- the MAC CE for the padding sidelink BSR.

Specifically, the priority of the data (the first data), from any logical channel, with the most stringent delay budget may be higher than the priority of the data from any other logical channel.

In an embodiment, the terminal device may map the first logical channel to a first grant. Specifically, when the access network device configures the grant for the terminal device, the access network device may configure the first grant to be dedicated to the data with the high scheduling emergency requirement or be preferentially used for the data with the high scheduling emergency requirement. In this case, the resource corresponding to the first grant is used only for carrying the data with the high scheduling emergency requirement, or is preferentially used for carrying the data with the high scheduling emergency requirement. Then, in the case where the existence of the first grant is confirmed, the terminal device may map the first logical channel directly to the resource corresponding to the first grant.

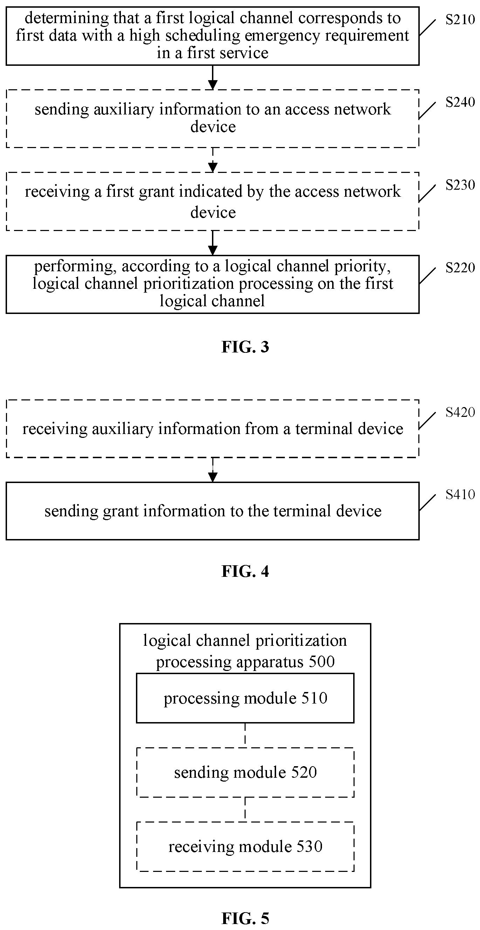

FIG. 3 is a schematic flowchart of a logical channel prioritization processing method in an embodiment of the present disclosure, which is applied to a terminal device.

In an embodiment, as shown in FIG. 3, the method described above may further include S230, where a first grant indicated by the access network device is received. For example, the terminal device may receive grant information from the access network device, where the grant information may be dedicated to or preferentially used for the first grant of the data with the high scheduling emergency requirement.

In an embodiment, before S230, the method described above may further include S240, where auxiliary information is sent to the access network device. Specifically, the terminal device may send to the access network device the auxiliary information, where the auxiliary information may be used for the access network device to determine the first grant.

It should be noted that in FIG. 3, S230 and S240 are executed before S220. However, the order in which S230 and S240 are executed relative to S210 is unrestricted. One or more of S230 and S240 may be executed before, after, or simultaneously with S210.

Based on the same inventive concept, the embodiments of the present disclosure provide a logical channel prioritization processing method, and the communication method may be applied to an access network device.

FIG. 4 is a schematic flowchart of a logical channel prioritization processing method in an embodiment of the present disclosure, which is applied to an access network device. As shown in FIG. 4, the method may include S410.

At S410, a first grant is indicated to a terminal device.

In some embodiments, the first grant is dedicated to or preferentially used for first data with a high scheduling emergency requirement.

In an embodiment, before S410, the method described above may further include S420, where auxiliary information from the terminal device is received.

In some embodiment, the auxiliary information is used for the access network device to determine the first grant.

It can be understood that the access network device, after receiving the auxiliary information from the terminal device, may determine the grant information based on the auxiliary information.

In an embodiment, the method described above may include sending an RRC signaling to the terminal.

In some embodiment, the RRC signaling includes a logical channel configuration parameter. The logical channel configuration parameter is used for indicating a priority of a first logical channel. The first logical channel corresponds to first data, in a first service, with a high scheduling emergency requirement.

It should be noted that S410 and S420 of the logical channel prioritization processing method at the access network device side shown in FIG. 4 correspond to S230 and S240 of the logical channel prioritization processing method at the terminal device side shown in FIG. 3, respectively. Therefore, specific details of S410 and S420 can be referred to S230 and S240, and the embodiments of the present disclosure will not elaborate on this.

According to the logical channel prioritization processing method of the embodiments of the present disclosure, the logical channel prioritization processing is performed on the first logical channel corresponding to the first data with the high scheduling emergency requirement. Specifically, the priority of the logical channel corresponding to the data with the high scheduling emergency requirement is set to be only after the MAC CE, and the logical channel is preferentially mapped to a resource for transmission. In this way, emergency transmission situations where the data with the high scheduling emergency requirement is present can be responded to in a timely manner, which achieves the prioritized transmission of the emergency data, and meets the delay requirement of the data transmission. The priority of the logical channel corresponding to the data with the high scheduling emergency requirement may be set to be only after the MAC CE, and the logical channel is preferentially mapped to a resource for transmission. In this way, emergency transmission situations where the data with the high scheduling emergency requirement is present can be responded to promptly, which achieves the prioritized transmission of the emergency data, and meets the delay requirement of the data transmission.

Based on the same inventive conception, the embodiments of the present disclosure further provide a logical channel prioritization processing apparatus. The apparatus may be provided in a terminal device. FIG. 5 is a schematic diagram of a structure of a logical channel prioritization processing apparatus in an embodiment of the present disclosure. As shown in FIG. 5, the apparatus 500 includes a processing module 510. The processing module 510 is configured to determine that a first logical channel corresponds to first data with a high scheduling emergency requirement in a first service, and perform, according to a logical channel priority, logical channel prioritization processing on the first logical channel.

In some possible embodiments, the first service may be an XR service.

In some possible embodiments, the first data may be provided with a most stringent delay budget.

In some possible embodiments, the first data may be data indicated by an NAS and/or an application layer; or the first data may be data whose time left until exceeding a packet delay budget is less than a first threshold.

In some possible embodiments, the first data may be a packet or a packet set.

In some possible embodiments, through the logical channel prioritization processing, the first data may be carried in any grant of uplink grants configured for the terminal device by an access network device.

In some possible embodiments, the logical channel prioritization processing may include a relaxed logical channel selection procedure.

In some possible embodiments, in the relaxed logical channel selection procedure, at least one of the following is performed on the first logical channel: in a case of a failure of an allowedCG-List configuration restriction condition, mapping data of a logical channel to any configured grant that has been configured; in a case of a failure of an allowedHARQ-mode configuration restriction condition, providing no restriction for mapping of a logical channel and an HARQ mode; in a case of a failure of an allowedSCS-List configuration restriction condition, mapping data of a logical channel to any configured numerology; in a case of a failure of an allowedPHY-PriorityIndex configuration restriction condition, mapping data of a logical channel to any dynamic grant; in a case of a failure of an allowedServingCells configuration restriction condition, mapping data of a logical channel to any configured serving cell of a cell group; in a case of a failure of a configuredGrantType1Allowed configuration restriction condition, not transmitting data of a logical channel by using a configured grant type 1; and in a case of a failure of a maxPUSCH-Duration configuration restriction condition, transmitting data of a logical channel by using any PUSCH duration.

In some possible embodiments, the processing module 510 may be configured to not use a token bucket to restrict transmission of the first data of the first logical channel.

In some possible embodiments, the processing module 510 may be configured to preferentially map, when a delay budget of the first data of the first service is less than a first threshold, the first data of the first logical channel to a grant.

In some possible embodiments, a priority of the first logical channel is temporarily elevated to a highest priority level when resource allocation or logical channel priority level ranking is performed.

In some possible embodiments, the processing module 510 may be configured to map the first logical channel to a first grant; where the first grant is dedicated to the first data, or is preferentially used for the first data.

In some possible embodiments, the apparatus 500 described above may further include a receiving module 530. The receiving module 530 is configured to receive the first grant indicated by an access network device.

In some possible embodiments, the sending module 520 may be further configured to send auxiliary information to the access network device, where the auxiliary information is used for the access network device to determine the first grant.

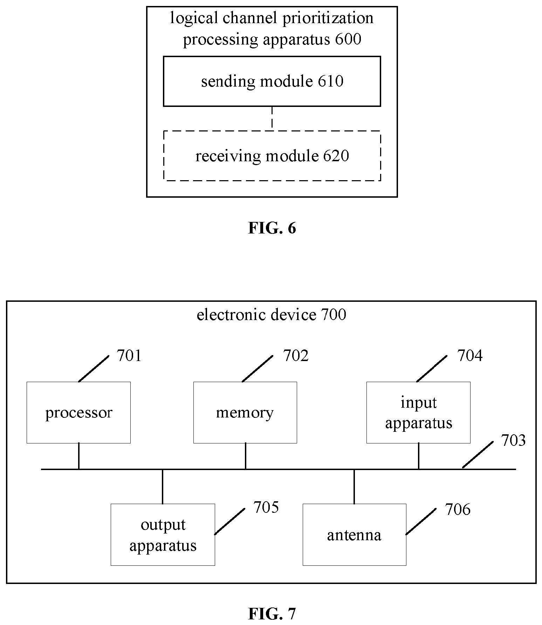

Based on the same inventive conception, the embodiments of the present disclosure further provide a logical channel prioritization processing apparatus. The apparatus may be provided in an access network device. FIG. 6 is a schematic diagram of a structure of a logical channel prioritization processing apparatus in an embodiment of the present disclosure. As shown in FIG. 6, the apparatus 600 includes a sending module 610. The sending module 610 is configured to indicate a first grant to a terminal device, where the first grant is dedicated to or preferentially used for first data with a high scheduling emergency requirement.

In some possible embodiments, the apparatus 600 described above may further include a receiving module 620. The receiving module 620 is configured to receive auxiliary information from the terminal device, where the auxiliary information is used for the access network device to determine the first grant.

Based on the same inventive conception, the embodiments of the present disclosure further provide an electronic device. The electronic device may be the terminal device or access network device in any one or more of the embodiments described above. FIG. 7 is a schematic diagram of a structure of an electronic device in an embodiment of the present disclosure. As shown in FIG. 7, the electronic device 700, which uses a general-purpose computer hardware, includes a processor 701, a memory 702, a bus 703, an input apparatus 704, and an output apparatus 705.

In some possible embodiments, the memory 702 may include computer storage media in the form of the volatile and/or non-volatile memory, such as the read-only memory and/or the random access memory. The memory 702 may store the operating system, the application program, other program modules, the executable code, the program data, and the user data, etc.

The input apparatus 704 may be configured to input instructions and information to the electronic device. For example, the input apparatus 704 may be a keyboard or a pointing apparatus such as a mouse, a trackball, a touchpad, a microphone, a joystick, a game pad, a satellite television antenna, a scanner, or the like. These input apparatuses may be connected to the processor 701 via the bus 703.

The output apparatus 705 may be configured for the electronic device to output information, and in addition to the monitor, the output apparatus 705 may also be other peripheral output apparatus, such as the speaker and/or the printing apparatus. These output apparatuses may also be connected to the processor 701 via the bus 703.

The electronic device may be connected to a network, such as to a local area network (LAN), via an antenna 706. In a networked environment, a computer-executed instruction stored in the control device may be stored in a remote storage device, but is not limited to the local storage.

When the processor 701 in the electronic device executes the executable code or application program stored in the memory 702, the electronic device performs the logical channel prioritization processing method at the electronic device side and the access network device side in the above embodiments, and the specific execution process may refer to the above embodiments, which will not be repeated herein.

Based on the same inventive conception, the embodiments of the present disclosure further provide a terminal device. The terminal device is consistent with the terminal device in one or more of the embodiments described above. In an embodiment, the terminal device may be a mobile phone, a computer, a digital broadcast user device, a message transceiver device, a game console, a tablet device, a medical device, a fitness device, or a personal digital assistant, etc.

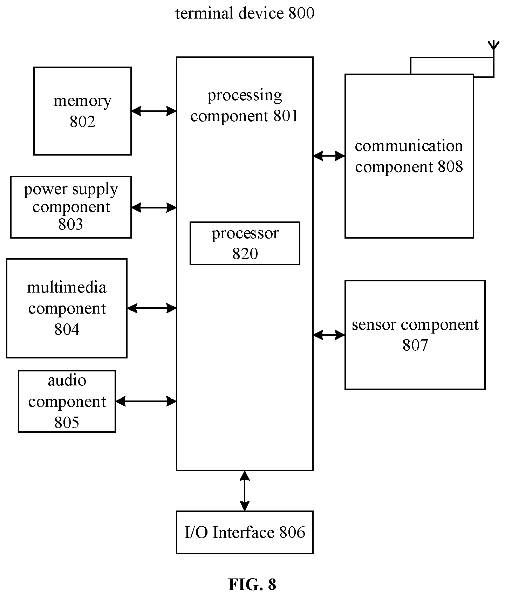

FIG. 8 is a schematic diagram of a structure of a terminal device in an embodiment of the present disclosure. As shown in FIG. 8, the terminal device 800 may include one or more of the following components: a processing component 801, a memory 802, a power supply component 803, a multimedia component 804, an audio component 805, an input/output (I/O) interface 806, a sensor component 807, and a communication component 808.

The processing component 801 generally controls the overall operation of the terminal device 800, such as operations associated with display, telephone calls, data communication, camera operations, and recording operations. The processing component 801 may include one or more processors 810 to execute an instruction to complete all or part of the steps of the method described above. In addition, the processing component 801 may include one or more modules that facilitate interaction between the processing component 801 and other components. For example, the processing component 801 may include a multimedia module to facilitate interaction between the multimedia component 804 and the processing component 801.

The memory 802 is configured to store various types of data to support the operations on the terminal device 800. Examples of such data include the following: the instruction of any application program or method operated on the terminal device 800, the contact data, the phonebook data, the message, the picture, video, etc. The memory 802 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 803 supplies power to various components of the terminal device 800. The power supply component 803 may include a power supply management system, one or more power supplies, and other components associated with generating, managing and distributing power for the terminal device 800.

The multimedia component 804 includes a screen that provides an output interface between the terminal device 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 804 includes a front-facing camera and/or a rear-facing camera. The front-facing camera and/or the rear-facing camera may receive the external multimedia data when the terminal device 800 is in an operating mode, such as a shooting mode or a video mode. Each of the front-facing camera and the rear-facing camera may be a fixed optical lens system or have a focal length and optical zoom capability.

The audio component 805 is configured to output and/or input audio signals. For example, the audio component 805 includes a microphone (MIC) configured to receive external audio signals when the terminal device 800 is in an operating mode, such as a calling mode, a recording mode and a voice recognition mode. The received audio signals may be further stored in the memory 802 or sent via the communication component 808. In some embodiments, the audio component 805 further includes a speaker for outputting the audio signals.

The I/O interface 806 provides an interface between the processing component 801 and a peripheral interface module, and the peripheral interface module described above may be a keypad, a click wheel, a button, etc. These buttons may include, but are not limited to, a home button, a volume button, a start button, and a lock button.

The sensor component 807 includes one or more sensors configured to provide state assessment of various aspects of the terminal device 800. For example, the sensor component 807 may detect an open/closed state of the terminal device 800, and relative positioning of the components, for example, the components are the display and small keypad of the terminal device 800. The sensor component 807 may also detect a change in the position of the terminal device 800 or a change in the position of a component of the terminal device 800, the presence or absence of contact between the user and the terminal device 800, the orientation or acceleration/deceleration of the terminal device 800, and temperature changes of the terminal device 800. The sensor component 807 may include a proximity sensor that is configured to detect the presence of nearby objects in the absence of any physical contact. The sensor component 807 may also include a light sensor, such as a CMOS or CCD image sensor, for use in imaging applications. In some embodiments, the sensor component 807 may also include an accelerometer sensor, a gyroscope sensor, a magnetic sensor, a pressure sensor, or a temperature sensor.

The communication component 808 is configured to facilitate the communication between the terminal device 800 and other devices in wired or wireless manners. The terminal device 800 may access a wireless network based on a communication standard, such as Wi-Fi, 2G, 3G, 4G, 5G, or later evolved releases, or a combination thereof. In an exemplary embodiment, the communication component 808 receives broadcast signals or broadcast related information from an external broadcast management system via a broadcast channel. In an exemplary embodiment, the communication component 808 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, or other technologies.

In an exemplary embodiment, the terminal device 800 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, to perform the method described above.

Based on the same inventive concept, the embodiments of the present disclosure provide a network device. The network device is consistent with the access network device in one or more of the embodiments described above.

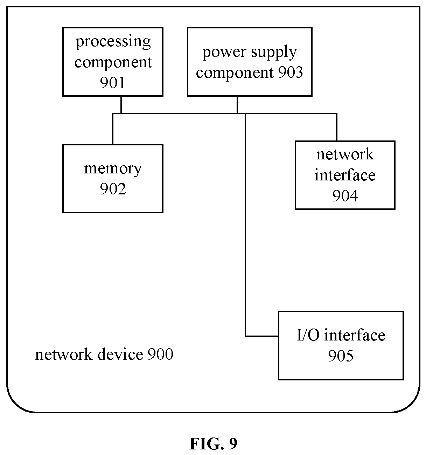

FIG. 9 is a schematic diagram of a structure of a network device in an embodiment of the present disclosure. As shown in FIG. 9, the network device 900 may include a processing component 901, where the processing component 901 further includes one or more processors, and a memory resource represented by a memory 902 for storing an instruction, such as an application program, that is executable by the processing component 901. The application program stored in the memory 902 may include one or more modules each corresponding to a set of instructions. In addition, the processing component 901 is configured to execute the instruction to perform the logical channel prioritization processing method described above applied to the access network device.

The network device 900 may further include a power supply component 903 configured to perform power management of the network device 900, a wired or wireless network interface 904 configured to connect the network device 900 to the network, and an I/O interface 905. The network device 900 may operate an operating system stored in the memory 902, such as Windows Server TM, Mac OS XTM, UnixTM, LinuxTM, FreeBSDTM, or the like.

Based on the same inventive concept, the embodiments of the present disclosure provide a computer-readable storage medium storing a computer-executable instruction. The computer-executable instruction, when executed by a processor of a computer, is used for performing the logical channel prioritization processing method at the terminal device side or the access network device side in one or more of the embodiments described above.

Based on the same inventive concept, the embodiments of the present disclosure provide a computer program or a computer program product. The computer program product, when executed on a computer, causes the computer to implement the logical channel prioritization processing method at the terminal device side or the access network device side in one or more of the embodiments described above.

After considering the specification and practicing the invention disclosed herein, those skilled in the art will easily come up with other implementation solutions of the present invention. The present disclosure is intended to cover any variations, uses or adaptive changes of the present invention, and the variations, uses or adaptive changes follow the general principles of the present invention and include common knowledge or commonly used technical means in the technical field that is not disclosed in the present disclosure. The specification and embodiments are only considered to be exemplary, and the true scope and spirit of the present invention are indicated by the following claims.

It should be noted that the function of the same parameter and signaling in different embodiments is also the same due to being based on the same inventive conception, and therefore is not explained separately in each embodiment.

It should be understood that the present invention is not limited to the precise structure which has been described above and illustrated in the accompanying drawings, and that various modifications and alterations may be made without departing from the scope of the present invention. The scope of the present invention is limited only by the appended claims.

## Claims

1. A logical channel prioritization processing method, applied to a terminal device, comprising:
determining that a first logical channel corresponds to first data with a high scheduling emergency requirement in a first service; and
performing, according to a logical channel priority, logical channel prioritization processing on the first logical channel.

2. The method according to claim 1, wherein the first service is an extended reality (XR) service.

3. The method according to claim 1, wherein the first data is provided with a most stringent delay budget.

4. The method according to claim 1, wherein the first data is data indicated by a non-access stratum (NAS) and/or an application layer; or
the first data is data whose time left until exceeding a packet delay budget is less than a first threshold.

5. The method according to any one of claims 1 to 4, wherein the first data is a packet or a packet set.

6. The method according to claim 1, wherein through the logical channel prioritization processing, the first data is carried in any grant of uplink grants configured for the terminal device by an access network device.

7. The method according to claim 1, wherein the logical channel prioritization processing comprises a relaxed logical channel selection procedure.

8. The method according to claim 7, wherein in the relaxed logical channel selection procedure, at least one of the following is performed on the first logical channel:
in a case of a failure of an allowed configured grant list configuration restriction condition, mapping data of a logical channel to any configured grant that has been configured;
in a case of a failure of an allowed hybrid automatic retransmission request mode configuration restriction condition, providing no restriction for mapping of a logical channel and a hybrid automatic retransmission request (HARQ) mode;
in a case of a failure of an allowed subcarrier spacing list configuration restriction condition, mapping data of a logical channel to any configured numerology;
in a case of a failure of an allowed physical priority index configuration restriction condition, mapping data of a logical channel to any dynamic grant;
in a case of a failure of an allowed serving cells configuration restriction condition, mapping data of a logical channel to any configured serving cell of a cell group;
in a case of a failure of a configured grant type 1 allowed configuration restriction condition, not transmitting data of a logical channel by using a configured grant type 1; and
in a case of a failure of a maximum physical uplink shared channel duration configuration restriction condition, transmitting data of a logical channel by using any physical uplink shared channel (PUSCH) duration.

9. The method according to claim 1, wherein in the performing, according to the logical channel priority, the logical channel prioritization processing on the first logical channel, transmission of the first data of the first logical channel is not restricted by using a token bucket.

10. The method according to claim 9, wherein when the transmission of the first data of the first logical channel is not restricted by using the token bucket, the performing, according to the logical channel priority, the logical channel prioritization processing on the first logical channel comprises:
preferentially mapping, when a delay budget of the first data of the first service is less than a first threshold, the first data of the first logical channel to a grant.

11. The method according to claim 1, wherein a priority of the first logical channel is temporarily elevated to a highest priority level when resource allocation or logical channel priority level ranking is performed.

12. The method according to claim 1, wherein the method further comprises:
mapping the first logical channel to a first grant; wherein
the first grant is dedicated to the first data, or is preferentially used for the first data.

13. The method according to claim 12, wherein the method further comprises:
receiving the first grant indicated by an access network device.

14. The method according to claim 13, wherein before the receiving the first grant indicated by the access network device, the method further comprises:
sending auxiliary information to the access network device, wherein the auxiliary information is used for the access network device to determine the first grant.

15. A logical channel prioritization processing method, applied to an access network device, comprising:
indicating a first grant to a terminal device, wherein the first grant is dedicated to or preferentially used for first data with a high scheduling emergency requirement.

16. The method according to claim 15, wherein before the indicating the first grant to the terminal device, the method further comprises:
receiving auxiliary information from the terminal device, wherein the auxiliary information is used for the access network device to determine the first grant.

17. A logical channel prioritization processing apparatus, arranged in a terminal device, comprising:
a processing module, configured to determine that a first logical channel corresponds to first data with a high scheduling emergency requirement in a first service, and perform, according to a logical channel priority, logical channel prioritization processing on the first logical channel.

18. A logical channel prioritization processing apparatus, arranged in an access network device, comprising:
a sending module, configured to indicate a first grant to a terminal device, wherein the first grant is dedicated to or preferentially used for first data with a high scheduling emergency requirement.

19. An electronic device, comprising:
a memory, configured to store a computer-executable instruction; and
a processor, configured to execute the computer-executable instruction in the memory, thereby implementing the logical channel prioritization processing method according to any one of claims 1 to 14, or the logical channel prioritization processing method according to claim 15 or 16.

20. A computer storage medium, storing a computer-executable instruction, wherein the computer-executable instruction, when executed by a processor of an electronic device, is capable of implementing the logical channel prioritization processing method according to any one of claims 1 to 14, or the logical channel prioritization processing method according to claim 15 or 16.
